# FASCICULE DE BREVET EUROPEEN

(11) **EP 2 876 294 B1**
(45) Date de publication et mention de la délivrance du brevet: **23.03.2016**
(21) Numéro de dépôt: 14003604.7
(22) Date de dépôt: 22.10.2014
(51) Int. Cl.: F02M 37/22, B01D 46/00, B64D 37/00, F02C 7/22, F02M 37/00, B64D 37/08, F02M 37/02

(54) **Boîtier de filtration, circuit de carburant pour alimenter en carburant un moteur, et aéronef**
Filtergehäuse, Kraftstoffversorgungssystem für einen Motor und Luftfahrzeug
Filter housing, engine fuel suppy circuit and aircraft

(30) Priorité: 20.11.2013 FR 1302673
(43) Date de publication de la demande: 27.05.2015
(73) Titulaire: Airbus Helicopters, 13725 Marignane Cedex (FR)
(72) Inventeur: Bornes, Sylvain, F-13111 Coudoux (FR)
(74) Mandataire: GPI & Associés

(56) Documents cités:
- EP-A2- 0 278 755
- EP-A2- 0 806 318
- JP-A- 2011 032 898
- US-A- 2 953 156
- US-A- 2 961 130
- US-A- 3 259 066
- US-A1- 2009 000 844

## Description

La présente invention concerne un boîtier de filtration, un circuit de carburant pour alimenter en carburant un moteur muni de ce boîtier de filtration, et un aéronef comprenant ce circuit de carburant.

L'invention se situe donc dans le domaine technique des aéronefs, et des giravions plus spécifiquement.

Les giravions sont des aéronefs présentant la particularité d'être équipés d'au moins une voilure tournante procurant au moins leur sustentation, voire aussi leur propulsion et/ou leur manoeuvre en vol. Une telle voilure tournante est entraînée en rotation par un groupe de motorisation comprenant un ou plusieurs organes moteurs.

Dès lors, un circuit de carburant d'un aéronef peut comprendre au moins un réservoir de stockage de carburant pouvant être implanté dans la barque d'un giravion par exemple.

Classiquement, un circuit de carburant comporte un réservoir principal par moteur, chaque réservoir principal étant en communication fluidique avec un moteur. Un tel réservoir principal est parfois dénommé « nourrice » par l'homme du métier. Le carburant est alors puisé dans le réservoir principal pour être acheminé vers le moteur associé. Le carburant peut être acheminé du réservoir principal vers un moteur par une pompe de gavage agencée dans le réservoir principal et/ou par une pompe d'aspiration d'un moteur.

De plus, le circuit de carburant peut comprendre au moins un réservoir secondaire en communication fluidique avec au moins un réservoir principal.

Par exemple, un réservoir principal peut être agencé à l'intérieur d'un réservoir secondaire, ou peut être agencé à côté d'un réservoir secondaire.

Le réservoir principal est donc formé d'une enceinte ayant un volume devant permettre un approvisionnement d'un moteur durant une durée d'utilisation définie par des règlements de certification.

Sur un aéronef bimoteur, le circuit de carburant peut comprendre deux réservoirs principaux et deux réservoirs secondaires, chaque réservoir secondaire étant en communication fluidique avec chaque réservoir principal.

Par ailleurs, un réservoir principal peut être approvisionné en carburant depuis un réservoir secondaire par l'intermédiaire d'un système de transfert mettant en oeuvre une pompe de transfert logée à l'intérieur du réservoir principal. Le système de transfert comporte alors un éjecteur placé à l'intérieur d'un réservoir secondaire pour acheminer du carburant du réservoir secondaire vers le réservoir principal.

Ainsi, une pompe de transfert agencée dans un réservoir principal est reliée par une tuyauterie à au moins un éjecteur disposé dans un réservoir secondaire. Cet éjecteur est alors relié au réservoir principal par une autre tuyauterie.

A partir d'une circulation d'un flux primaire de carburant générée par la pompe de transfert à l'intérieur du système de transfert à partir du réservoir principal, un tel éjecteur induit une capture dans le réservoir secondaire d'un flux secondaire de carburant. Le flux secondaire de carburant est alors refoulé conjointement avec le flux primaire hors de l'éjecteur vers le réservoir principal au travers d'une tuyauterie prévue à cet effet. La capacité du réservoir principal étant limitée, ce réservoir principal peut être équipé d'un dispositif de trop plein restituant par débordement un éventuel excès de carburant vers un réservoir secondaire.

Compte tenu de la proximité entre un réservoir principal et un réservoir secondaire, et compte tenu des faibles pertes de charge induites par le système de transfert, la pompe de transfert peut être une pompe basse pression, à titre indicatif de l'ordre inférieure à 200 mb (200 millibars) et plus couramment inférieure à 100 mb. La pompe de transfert peut notamment être entraînée par énergie électrique prélevée à partir du réseau de bord électrique de l'aéronef.

Par ailleurs, un éjecteur comporte dans sa généralité une buse amont d'admission d'un flux primaire de fluide débouchant sur canal principal muni d'une partie rétreinte. Un canal secondaire d'admission d'un flux secondaire de fluide débouche sur le canal principal en amont de la buse. La circulation du flux primaire à l'intérieur du canal principal génère par aspiration une capture du flux secondaire de fluide à travers le canal secondaire. Le flux secondaire et le flux primaire se mélangent en amont de la partie rétreinte, puis le flux global de fluide issu de ce mélange est évacué hors de l'éjecteur en aval de la partie rétreinte. Les notions amont et aval sont à considérer au regard du sens d'écoulement des flux afférents à travers l'éjecteur.

L'éjecteur fonctionne alors par effet venturi pour générer un flux de carburant allant d'un réservoir secondaire vers un réservoir principal.

De plus, les équipements d'un système de transfert comprennent usuellement des grilles de filtration pour éviter le transfert de matière polluante vers un moteur et pour empêcher le colmatage de l'équipement. Les pompes de gavage, les éjecteurs et les pompes de transfert comprennent donc parfois des grilles de filtration contre des polluants. Ces grilles sont parfois dénommées « crépine ».

Ces grilles sont montées sur les équipements pour filtrer le carburant.

Les grilles sont contrôlées lors d'opérations de maintenance afin d'être nettoyées en cas d'obturation par des polluants. Cependant, les grilles peuvent être difficiles d'accès.

Sur un giravion muni de réservoirs agencés dans la barque du giravion, chaque réservoir présente une hauteur faible. De plus, les réservoirs sont difficilement accessibles. Par conséquent, un opérateur peut être amené à démonter intégralement un réservoir pour avoir accès à une grille d'un éjecteur par exemple.

Le nettoyage périodique des grilles de filtration d'équipements d'un circuit de carburant peut donc induire la vidange du circuit de carburant, puis l'ouverture des réservoirs et le démontage des équipements. Ce procédé nécessite des opérations de maintenance lourdes, longues et coûteuses.

Le document US3275061 (BOEING Co.) présente un éjecteur d'alimentation implanté sur une ligne d'alimentation en carburant d'un moteur d'un aéronef, un avion plus particulièrement.

La pression du carburant dans une ligne d'alimentation est alors augmentée par l'éjecteur.

En effet, certains aéronefs peuvent être munis d'éjecteurs pour maximiser la pression d'un flux de carburant avant son admission dans un moteur.

Ce choix technique peut être délicat à implémenter sur un giravion muni d'un réservoir éloigné du moteur à alimenter pour des raisons de sécurité. En effet, cette configuration implique l'agencement de tuyauteries serpentant dans le giravion pour acheminer un carburant sous haute pression à un moteur.

Le document US 3259066 décrit une architecture pour alimenter un moteur à l'aide d'un éjecteur.

Le document FR 2949352 dévoile un système de surveillance du filtre d'un fluide pour un moteur d'aéronef par le moyen d'une comparaison de mesures de pressions entre l'amont et l'aval du filtre.

Le document EP0806318 dévoile une installation carburant d'un véhicule comprenant un réservoir ayant plusieurs compartiments et dont les fonds sont séparés les uns des autres. L'installation comporte une unité de transfert pour débiter le carburant du réservoir. Cette unité de transfert est reliée à un dispositif de prélèvement présent dans un premier compartiment et en communication fluidique avec un deuxième compartiment par une conduite d'aspiration. L'unité de transfert comporte des orifices débouchant le premier compartiment.

On connait en outre les documents US 2953156, US 2009/000844, US 2961130, EP0278755 et JP 2011 032898.

La présente invention a alors pour objet un boîtier de filtration visant à faciliter une opération de nettoyage de grilles de filtration. Un tel boîtier de filtration peut alors être agencé sur un circuit de carburant, et notamment un circuit de carburant d'un aéronef.

Ainsi l'invention concerne notamment un boîtier de filtration pour filtrer du carburant en amont d'au moins un éjecteur et d'au moins une pompe de transfert de carburant.

Ce boîtier de filtration comporte :
- au moins un compartiment dit « compartiment principal » muni d'une entrée dite « entrée principale » ayant pour fonction d'être en communication fluidique avec un réservoir principal et d'une sortie dite « sortie principale » par pompe de transfert à alimenter,
- au moins un compartiment dit « compartiment secondaire », chaque compartiment secondaire comprenant une entrée dite « entrée secondaire » ayant pour fonction d'être en communication fluidique avec un réservoir secondaire distinct du réservoir principal et une sortie dite « sortie secondaire » ayant pour fonction d'être en communication fluidique avec un éjecteur,
- une grille par compartiment pour filtrer un carburant traversant ce compartiment, chaque grille coopérant avec un système de mobilité en translation pour être extraite dudit compartiment au travers d'une fente présente dans un fond du compartiment,
- un système d'obturation étanche par compartiment ayant pour fonction d'empêcher l'échappement de carburant par ladite fente d'un compartiment en cas d'absence de ladite grille.

On note que le terme « compartiment » employé sans les qualificatifs « principal » et/ou « secondaire » désigne aussi bien un compartiment principal qu'un compartiment secondaire.

De même, le terme « entrée » employé sans les qualificatifs « principale » et/ou « secondaire » désigne aussi bien une entrée principale qu'une entrée secondaire, et le terme « sortie » employé sans les qualificatifs « principale » et/ou « secondaire » désigne aussi bien une sortie principale qu'une sortie secondaire.

Ce boîtier de filtration permet donc de déporter les grilles de filtration associées à des équipements de transfert de fluide vers un organe permettant leur extraction en dehors de l'aéronef sans vidanger le circuit de carburant.

Pour nettoyer des grilles de filtration, un opérateur manoeuvre les systèmes de mobilité pour extraire chaque grille de filtration. La vidange du circuit de carburant n'est pas nécessaire dans la mesure où chaque système d'obturation permet d'éviter la fuite de carburant vers l'extérieur au travers du boîtier de filtration.

Le système d'obturation peut minimiser le volume de carburant évacué hors du circuit de carburant lors de la dépose d'une grille de filtration du boîtier de filtration.

Dès lors, un opérateur peut disposer un carénage sous l'aéronef lors d'une opération de nettoyage ou de contrôle visuel des grilles de filtration sous le réservoir examiné, pour éviter de répandre du carburant sur un sol.

Les opérations de maintenance tendent alors à être facilitées par rapport à une opération impliquant le démontage d'un réservoir.

De plus, le boîtier de filtration permet d'éviter l'ouverture des réservoirs pour les opérations de contrôle.

Ce boîtier de filtration comporte donc un système d'obturation permettant de déposer les grilles de filtration simplement et sans vidange du circuit de carburant. De plus, toutes les grilles de filtration d'un réseau peuvent être déposées lors de la même opération en les démontant du boîtier de filtration concerné.

Chaque boîtier de filtration peut ainsi être installé dans un réservoir principal. L'invention évite alors l'agencement de dispositifs placés en dehors de réservoirs et notamment d'un réservoir principal, ce qui peut tendre à réduire des risques d'incendie.

De plus, en déportant les grilles de filtration d'un réseau fluidique dans un boîtier de filtration, l'invention peut faciliter l'agencement des éjecteurs de transfert de carburant de ce réseau dans le réservoir principal du réseau uniquement.

Une platine de fixation commune aux éjecteurs et aux pompes d'un même réseau est alors envisageable ce qui simplifie l'architecture du circuit de carburant.

En outre, ce boîtier de filtration permet alors de n'avoir qu'une seule tuyauterie entre un réservoir principal et un réservoir secondaire, contrairement aux solutions agençant un éjecteur dans un réservoir secondaire qui nécessitent l'emploi de deux tuyauteries.

Un réservoir principal peut donc être équipé d'un boîtier de filtration ouvrable mécaniquement et automatiquement lors d'une action de maintenance permettant le démontage des grilles de filtration. Par exemple, le système d'obturation peut isoler le volume de carburant situé autour des grilles de filtration du reste du réservoir principal.

Le boîtier de filtration possède alors plusieurs entrées/sorties associées aux différents circuits à filtrer (gavage moteur, circuit éjecteurs, transfert intergroupes).

Les équipements de transfert de carburant (pompes, éjecteurs) ne sont alors plus équipés indépendamment d'une grille de filtration. En effet, la fonction de filtration est déportée sur un boîtier de filtration.

Le boîtier de filtration peut de plus comporter une ou plusieurs des caractéristiques qui suivent.

Ainsi, au moins un système de mobilité en translation peut comporter d'une part un support solidaire d'une grille et, d'autre part, un système de fixation pour fixer de manière réversible et étanche le support au fond du boîtier ou à une structure située sous le boîtier de fixation.

Le système de mobilité en translation est alors un système relativement simple. Le système de fixation peut par exemple comprendre des organes vissés. En dévissant ces organes un opérateur peut alors enlever une grille de fixation du support.

Au moins un système de mobilité en translation peut par ailleurs comporter au moins un rail de guidage présent dans un compartiment.

Le mouvement translatif de chaque grille de fixation est ainsi guidé par au moins un rail de guidage pour garantir le positionnement de la grille de filtration.

En outre, le système d'obturation d'un compartiment peut comporter un système élastique et au moins un coulisseau, chaque coulisseau coopérant par interférence de forme avec une grille, cette grille poussant le coulisseau dans une position dite « position ouverte » lorsque cette grille est disposée dans un compartiment. Le système élastique tend de plus à positionner le coulisseau dans une position dite « position fermée » en l'absence de grille.

On entend par « coulisseau » une pièce mobile par rapport à un guide, tel qu'un rail.

Ce système d'obturation présente l'avantage d'être un système mécanique plaçant automatiquement un coulisseau dans une position fermée en l'absence d'une grille.

Dès lors, au moins un coulisseau coopère selon une première réalisation par interférence de forme avec une fente d'un fond d'un compartiment pour l'obturer dans la position fermée. Le coulisseau est alors plaqué contre la fente pour l'obturer.

Selon une deuxième réalisation, au moins un coulisseau coopère par interférence de forme avec chaque entrée et chaque sortie d'un compartiment pour les obturer dans ladite position fermée.

Par exemple, un unique coulisseau peut comprendre une pluralité de facettes disposées contre les entrées et les sorties d'un compartiment dans la position fermée.

De manière alternative, le boîtier de filtration comporte un coulisseau par entrée et sortie de chaque compartiment.

En outre, au moins un coulisseau peut comporter un joint d'étanchéité plaqué contre un carter périphérique du boîtier de filtration dans la position fermée pour maintenir une bonne étanchéité.

Selon une version, le boîtier de filtration comporte éventuellement deux compartiments secondaires et un compartiment principal. Chaque compartiment secondaire est alors relié à un réservoir secondaire.

Outre un boîtier de filtration, l'invention vise un circuit de carburant incorporant au moins un boîtier de filtration de ce type.

Ainsi, un circuit de carburant est prévu pour alimenter en carburant au moins un moteur, ce circuit de carburant étant muni d'au moins un réservoir principal en communication fluidique avec ce moteur, et d'au moins un réservoir secondaire en communication fluidique avec le réservoir principal, le circuit de carburant comportant au moins une pompe de transfert agencée dans le réservoir principal et au moins un éjecteur relié à une pompe de transfert.

Le circuit de carburant comporte un boîtier de filtration agencé dans chaque réservoir principal, chaque boîtier de filtration étant selon l'invention et comportant :
- au moins un compartiment principal muni d'une entrée principale en communication fluidique avec le réservoir principal accueillant ce boîtier de filtration, le compartiment principal étant muni d'une sortie principale reliée à au moins une pompe de transfert agencée dans le réservoir principal accueillant ce boîtier de filtration,
- au moins un compartiment secondaire, chaque compartiment secondaire ayant une entrée secondaire reliée à un réservoir secondaire distinct du réservoir principal et une sortie secondaire reliée à un éjecteur qui est agencé dans le réservoir principal accueillant ce boîtier de filtration,
- une grille par compartiment pour filtrer un carburant traversant ce compartiment, chaque grille coopérant avec un système de mobilité en translation pour être extraite dudit compartiment au travers d'une fente présente dans un fond du compartiment,
- un système d'obturation étanche par compartiment ayant pour fonction d'empêcher l'échappement de carburant par ladite fente d'un compartiment en cas d'absence de grille.

Ce circuit peut comporter une ou plusieurs des caractéristiques qui suivent.

Ainsi, le boîtier de filtration peut comporter un unique compartiment principal relié à au moins une pompe de transfert, chaque pompe de transfert étant reliée à au moins un éjecteur. Chaque pompe de transfert est donc en communication fluidique avec le compartiment principal pour puiser du carburant à partir de ce compartiment principal.

Par ailleurs, au moins un boîtier de filtration peut comporter un compartiment secondaire coopérant avec un unique éjecteur pour chaque réservoir secondaire qui est relié au réservoir principal accueillant ce boîtier de filtration. Chaque compartiment secondaire coopère alors avec un unique réservoir secondaire et un unique éjecteur.

Par conséquent, le boîtier de filtration peut comprendre un compartiment par réservoir d'un groupe de réservoirs.

En outre, le circuit de carburant peut comporter deux réservoirs principaux et deux réservoirs secondaires, chaque réservoir principal étant relié aux deux réservoirs secondaires par un boîtier de filtration agencé dans ce réservoir principal.

Un tel circuit peut comprendre deux groupes de réservoirs pour alimenter deux moteurs, chaque groupe comportant un réservoir principal et les deux réservoirs secondaires.

Chaque groupe est alors pourvu d'un boîtier de filtration agencé dans le réservoir principal de ce groupe pour filtrer le carburant en amont d'au moins une pompe de transfert et d'éjecteurs agencés dans le réservoir principal correspondant.

Chaque moteur peut ainsi puiser sans assistance du carburant dans un réservoir principal.

Néanmoins, au moins une pompe de transfert agencée dans un réservoir principal peut comporter une tuyauterie pour acheminer un carburant vers un moteur. Cette pompe de transfert remplit alors aussi la fonction d'une pompe de gavage.

Enfin, l'invention, vise un aéronef comportant un circuit de carburant tel que décrit précédemment.

L'invention et ses avantages apparaîtront avec plus de détails dans le cadre de la description qui suit avec des exemples donnés à titre illustratif en référence aux figures annexées qui représentent :
- la figure 1, un schéma présentant un circuit de carburant muni d'un réservoir principal accueillant un boîtier de filtration,
- la figure 2, un schéma présentant l'extraction de grilles de filtration à partir d'un boîtier de filtration selon la figure 1,
- les figures 3 et 4, des schémas présentant un boîtier de filtration muni d'au moins un coulisseau pour obturer chaque entrée et chaque sortie d'un compartiment,
- la figure 5, un schéma présentant un circuit de carburant muni de deux réservoirs principaux et de deux réservoirs secondaires, et
- la figure 6, un schéma présentant un rail de guidage.

Les éléments présents dans plusieurs figures distinctes sont affectés d'une seule et même référence.

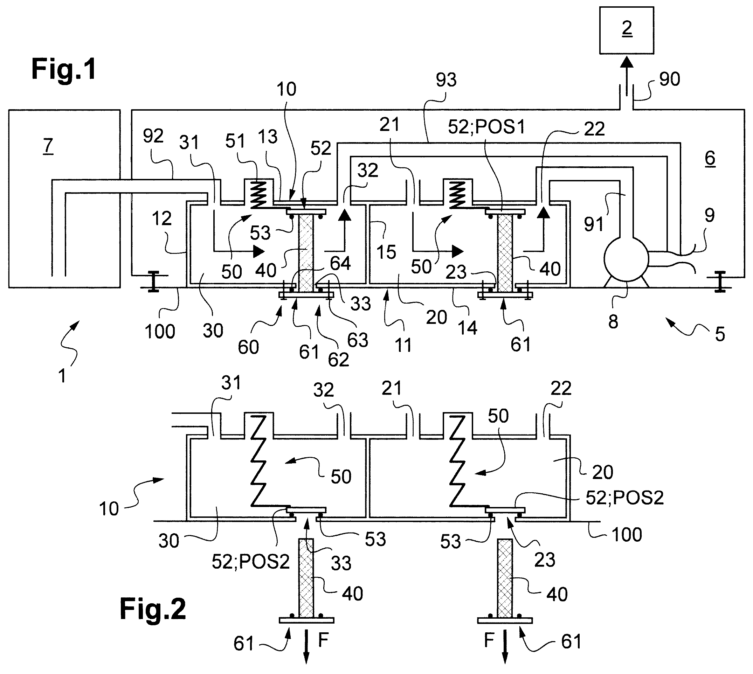

La figure 1 présente un circuit de carburant 5 d'un aéronef 1.

Ce circuit de carburant 5 est muni d'au moins un réservoir principal 6 en communication fluidique avec au moins un réservoir secondaire 7. De plus, le réservoir principal 6 est en communication fluidique avec un moteur 2 par une tuyauterie 90 notamment.

On entend par tuyauterie, une tuyauterie en tant que telle ou encore un ensemble de tuyauteries.

Le circuit de carburant comporte au moins une pompe de transfert 8 coopérant avec un éjecteur 9 pour transférer le carburant stocké dans un réservoir secondaire 7 vers le réservoir principal 6. La pompe de transfert peut aussi être en communication avec la tuyauterie 90 d'acheminement de carburant vers le moteur 2.

De manière innovante, chaque pompe de transfert 8 et chaque éjecteur 9 d'un groupe de réservoirs sont agencés dans le réservoir principal 7 de ce groupe de réservoirs. Par exemple, chaque pompe de transfert 8 et chaque éjecteur 9 sont fixés à une platine 100 fixée de manière étanche à un fond du réservoir principal par exemple.

Par ailleurs, le circuit de carburant comporte un boîtier de filtration 10 dans chaque réservoir principal. Chaque boîtier de filtration est interposé entre d'une part le carburant stocké dans les réservoirs principaux 6 et secondaires 7 et, d'autre part les éjecteurs 9 et les pompes de transfert 8.

Dès lors, l'invention propose un boîtier de filtration d'un carter 11 délimitant au moins un compartiment principal 20 et au moins un compartiment secondaire 30.

Ce carter 11 comprend par exemple un fond 14, une paroi supérieure 13 et des parois latérales 12 s'étendant en élévation entre le fond 14 et la paroi supérieure 13. Le boîtier de filtration peut alors être fixé sur une platine 100, et par exemple la platine portant les pompes de transfert et les éjecteurs. Un fond 14 peut aussi être matérialisé par une platine 100.

De plus, le carter 11 comprend des parois de séparation interne 15 séparant deux compartiments adjacents.

Chaque compartiment comporte au moins une entrée par laquelle du carburant peut pénétrer dans ce compartiment. De plus, chaque compartiment peut posséder au moins une sortie par laquelle du carburant peut s'échapper de ce compartiment.

Dans ces conditions, un boîtier de filtration comporte au moins un compartiment qualifié de « compartiment principal 20 ».

Un compartiment principal 20 est muni d'une entrée dite « entrée principale 21 » débouchant sur le réservoir principal 6. De plus, un compartiment principal 20 est muni d'une sortie dite « sortie principale 22 » débouchant sur une pompe de transfert 8 via une tuyauterie 91 par exemple.

Une pompe de transfert 8 aspire alors le carburant présent dans le réservoir principal 6. Ce carburant traverse à cet effet un compartiment principal 20 du boîtier de filtration 10 puis atteint la pompe de transfert 8. La pompe de transfert 8 refoule alors ce carburant vers au moins une entrée de flux primaire d'un éjecteur 9.

Un boîtier de filtration 10 comporte éventuellement un unique compartiment principal 20 relié à au moins une pompe de transfert 8, chaque pompe de transfert 8 étant reliée à au moins un éjecteur 9.

De plus, un boîtier de filtration comporte au moins un compartiment qualifié de « compartiment secondaire 30 ».

Un compartiment secondaire 30 est muni d'une entrée dite « entrée secondaire 31 » en liaison fluidique avec un réservoir secondaire 7, via une tuyauterie secondaire 92. De plus, un compartiment secondaire 30 est muni d'une sortie dite « sortie secondaire 32 » débouchant sur un éjecteur via une tuyauterie 93 par exemple. Plus précisément, le compartiment secondaire 30 d'un boîtier de filtration 10 débouche sur une entrée de flux secondaire d'un éjecteur.

Le flux primaire de carburant traversant un éjecteur sous l'impulsion d'une pompe de transfert génère l'aspiration d'un carburant présent dans un réservoir secondaire 7. Ce carburant traverse à cet effet un compartiment secondaire 30 du boîtier de filtration 10 puis atteint l'éjecteur 9. L'éjecteur refoule alors ce carburant conjointement avec le flux primaire reçu.

Le boîtier de filtration 10 peut comporter un compartiment secondaire 30 pour chaque réservoir secondaire 7 qui est relié au réservoir principal 6 accueillant ce boîtier de filtration 10. Un compartiment secondaire 30 coopère alors par exemple avec un unique éjecteur 9.

Par ailleurs, le boîtier de filtration 10 comporte une grille 40 par compartiment pour filtrer un carburant traversant ce compartiment. Chaque grille 40 est ainsi interposée dans un compartiment 20, 30 entre chaque entrée et chaque sortie de ce compartiment. Chaque grille peut par exemple comporter un assemblage à claire-voie et / ou un moyen poreux pour filtrer le carburant.

De plus, le boîtier de filtration comporte un système de mobilité en translation 60 pour maintenir de manière réversible une grille dans un compartiment. Chaque grille 40 coopère donc avec un système de mobilité en translation pour être extraite d'un compartiment au travers d'une fente 23, 33 présente dans un fond 14 du compartiment 20, 30.

Un tel système de mobilité en translation 60 peut comprendre un support 61 solidaire d'une grille 40. La grille peut s'étendre selon une direction en élévation, alors que le support s'étend dans un plan sensiblement orthogonal à cette direction en élévation.

Dès lors, un support 61 peut comprendre une plaque solidaire de la grille, directement ou via un pied par exemple. Le support 61 présente des dimensions supérieures aux dimensions de la fente d'un compartiment pour obturer cette fente lorsque la grille est présente dans un compartiment.

De plus, le support 61 peut comporter au moins un joint 64 pour assurer une bonne étanchéité entre le support 61 et le fond 14 du boîtier de filtration, ou encore entre le support 61 et la platine 100.

En outre, le système de mobilité en translation 60 inclut un système de fixation 62 pour fixer de manière réversible et étanche ledit support 61. Le système de fixation 62 comprend par exemple des visseries 63 ou des équivalents.

Ce support peut être en effet fixé au fond 14 du boîtier de filtration ou à la platine 100 suivant l'agencement retenu.

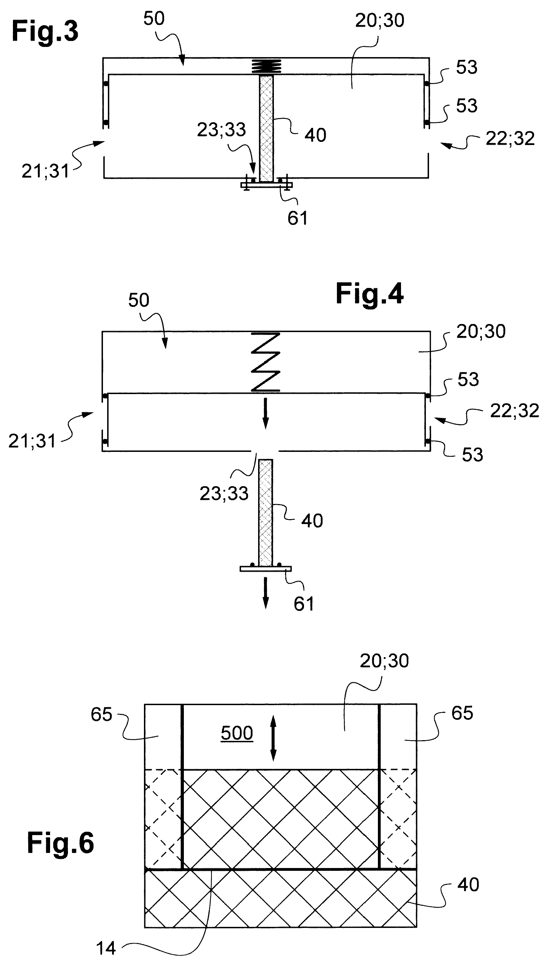

En référence à la figure 6, au moins un système de mobilité en translation 60 peut être muni d'au moins un rail de guidage 65 présent dans un compartiment 20, 30 pour coulisser selon la double flèche 500.

Par ailleurs et en référence à la figure 1, le boîtier de filtration comporte un système d'obturation 50 étanche par compartiment 20, 30 pour empêcher l'échappement de carburant par la fente 23, 33 d'un compartiment 20, 30 en cas d'absence de la grille 40.

Un tel système d'obturation 50 d'un compartiment 20, 30 peut comporter un système élastique 51 et au moins un coulisseau 52. Le système élastique peut comprendre un ressort ou un bloc de matière élastique.

Selon la variante, chaque coulisseau est étudié pour soit obturer la fente d'un compartiment, soit obturer au moins une entrée et/ou au moins une sortie du compartiment. Ainsi, chaque coulisseau 52 coopère par interférence de forme avec une grille 40 pour n'obturer aucune ouverture dans une position dite « position ouverte POS1 ». La grille exerce alors un effort allant dans le sens contraire de l'effort exercé par le système élastique sur le coulisseau. Par exemple, un coulisseau comporte une plaque apte à obturer temporairement une ouverture.

A l'inverse, le système élastique positionne le coulisseau dans une position dite « position fermée POS2 » en l'absence de grille 40.

Selon la réalisation des figures 1 et 2, au moins un coulisseau 52 coopère par interférence de forme avec une fente 23, 33 d'un fond 14 d'un compartiment 20, 30 pour l'obturer dans la position fermée POS2.

Le système d'obturation comporte alors un coulisseau muni d'une plaque parallèle au fond 14 par exemple. Le système élastique peut comprendre au moins un ressort interposé entre le carter 11 et le coulisseau.

En référence à la figure 1, lorsqu'une grille 40 est insérée dans un compartiment, cette grille 40 éloigne le coulisseau de la fente traversée par la grille 40. Par exemple, la grille 40 repousse le coulisseau contre la paroi supérieure du carter en comprimant le système élastique. Le coulisseau est alors dans la position ouverte POS1.

Pour nettoyer les grilles 40, un opérateur manoeuvre le système de mobilité en translation pour enlever les grilles 40 du boîtier de filtration selon les flèches F.

Dès lors, les systèmes élastiques poussent les coulisseaux 52 contre les fentes 23, 33 pour limiter l'évacuation de carburant du boîtier de filtration 10 vers l'extérieur. Les coulisseaux sont dans la position fermée POS2.

On note que chaque coulisseau peut comporter un joint d'étanchéité 53 plaqué contre un carter 11 périphérique du boîtier de filtration 10 dans la position fermée POS2.

En référence aux figures 3 et 4, au moins un coulisseau 52 peut coopérer par interférence de forme avec chaque entrée 21, 31 et chaque sortie 22, 32 d'un compartiment pour les obturer dans ladite position fermée POS2. Le système d'obturation isole alors l'intérieur du compartiment des autres organes du circuit de carburant.

Par exemple, un unique coulisseau peut obturer toutes les entrées et toutes les sorties d'un compartiment. Au moins un coulisseau 52 peut comporter au moins un joint d'étanchéité 53.

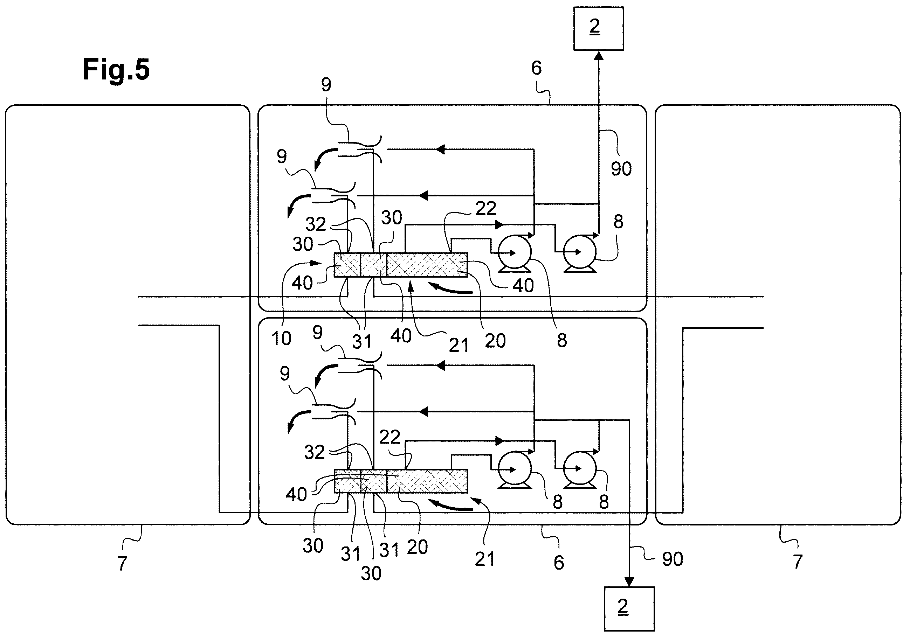

Par ailleurs et en référence à la figure 5, le circuit de carburant 5 est éventuellement équipé de deux réservoirs principaux 6 et deux réservoirs secondaires 7. Chaque réservoir principal 6 est alors relié aux deux réservoirs secondaires 7 par un boîtier de filtration 10 agencé dans ce réservoir principal 6.

Dès lors, chaque boîtier de filtration 10 peut comporter deux compartiments secondaires 30 et un compartiment principal 20.

Le compartiment principal est alors relié par au moins une sortie principale à au moins une pompe de transfert.

Chaque pompe de transfert peut être en communication fluidique avec deux éjecteurs, chaque éjecteur étant en communication fluidique avec un compartiment secondaire.

De plus, chaque pompe de transfert peut être en communication fluidique avec un moteur 2.

Par ailleurs, les réservoirs principaux peuvent être en communication fluidique l'un avec l'autre par un orifice d'intercommunication non représenté.

Eventuellement, un compartiment secondaire additionnel d'au moins un boîtier de filtration peut être relié à un éjecteur solidaire d'une tuyauterie s'étendant entre les deux réservoirs principaux.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Boîtier de filtration (10) pour filtrer du carburant en amont d'au moins un éjecteur (9) et d'au moins une pompe de transfert (8) de carburant,
**caractérisé en ce que** ledit boîtier de filtration (10) comporte :
- au moins un compartiment dit « compartiment principal (20) » muni d'une entrée dite « entrée principale (21) » ayant pour fonction d'être en communication fluidique avec un réservoir principal (6) et d'une sortie dite « sortie principale (22) » par pompe de transfert (8) à alimenter,
- au moins un compartiment dit « compartiment secondaire (30) », chaque compartiment secondaire (30) comprenant une entrée dite « entrée secondaire (31) » ayant pour fonction d'être en communication fluidique avec un réservoir secondaire (7) distinct du réservoir principal (6) et une sortie dite « sortie secondaire (32) » ayant pour fonction d'être en communication fluidique avec un éjecteur (9),
- une grille (40) par compartiment pour filtrer un carburant traversant ce compartiment, chaque grille (40) coopérant avec un système de mobilité en translation pour être extraite dudit compartiment au travers d'une fente (23, 33) présente dans un fond (14) du compartiment (20, 30),
- un système d'obturation (50) étanche par compartiment (20, 30) ayant pour fonction d'empêcher l'échappement de carburant par ladite fente (23, 33) d'un compartiment (20, 30) en cas d'absence de ladite grille (40).

2. Boîtier de filtration selon la revendication 1,
**caractérisé en ce qu'**au moins un système de mobilité en translation (60) comporte un support (61) solidaire d'une grille (40) et un système de fixation (62) pour fixer de manière réversible et étanche ledit support (61).

3. Boîtier de filtration selon l'une quelconque des revendications 1 à 2,
**caractérisé en ce qu'**au moins un système de mobilité en translation (60) comporte au moins un rail de guidage (65) présent dans un compartiment (20, 30).

4. Boîtier de filtration selon l'une quelconque des revendications 1 à 3,
**caractérisé en ce que** ledit système d'obturation (50) d'un compartiment (20, 30) comporte un système élastique (51) et au moins un coulisseau (52), chaque coulisseau (52) coopérant par interférence de forme avec une grille (40), ladite grille (40) poussant le coulisseau (52) dans une position dite « position ouverte (POS1) » lorsque cette grille (40) est disposée dans ledit compartiment (20, 30), et ledit système élastique (51) tendant à positionner ledit coulisseau (52) dans une position dite « position fermée (POS2) » en l'absence de grille (40).

5. Boîtier de filtration selon la revendication 4,
**caractérisé en ce qu'**au moins un coulisseau (52) coopère par interférence de forme avec une fente (23, 33) d'un fond (14) d'un compartiment (20, 30) pour l'obturer dans ladite position fermée (POS2).

6. Boîtier de filtration selon l'une quelconque des revendications 4 à 5,
**caractérisé en ce que** qu'au moins un coulisseau (52) coopère par interférence de forme avec chaque entrée (21, 31) et chaque sortie (22, 32) d'un compartiment pour les obturer dans ladite position fermée (POS2).

7. Boîtier de filtration selon l'une quelconque des revendications 4 à 6,
**caractérisé en ce qu'**au moins un coulisseau (52) comporte un joint d'étanchéité (53) plaqué contre un carter (11) périphérique du boîtier de filtration (10) dans ladite position fermée (POS2).

8. Boîtier de filtration selon l'une quelconque des revendications 1 à 7,
**caractérisé en ce que** ledit boîtier de filtration (10) comporte deux compartiments secondaires (30) et un compartiment principal (20).

9. Circuit de carburant (5) pour alimenter en carburant au moins un moteur (2), ledit circuit de carburant (5) étant muni d'au moins un réservoir principal (6) en communication fluidique avec un moteur (2), et d'au moins un réservoir secondaire (7) en communication fluidique avec ledit réservoir principal (6), ledit circuit de carburant (5) comportant au moins une pompe de transfert (8) agencée dans ledit réservoir principal (6) et au moins un éjecteur (9) relié à ladite pompe de transfert (8),
**caractérisé en ce que** le circuit de carburant (5) comporte un boîtier de filtration (10) agencé dans chaque réservoir principal (6), chaque boîtier de filtration (10) étant selon l'une quelconque des revendications 1 à 8, chaque boîtier de filtration (10) comportant
- au moins un compartiment principal (20) muni d'une entrée principale (21) en communication fluidique avec le réservoir principal (6) accueillant ce boîtier de filtration (10), le compartiment principal (20) étant muni d'une sortie principale (22) reliée à au moins une pompe de transfert (8) agencée dans le réservoir principal (6) accueillant ce boîtier de filtration (10),
- au moins un compartiment secondaire (30), chaque compartiment secondaire (30) ayant une entrée secondaire (31) reliée à un réservoir secondaire (7) distinct du réservoir principal (6) et une sortie secondaire (32) reliée à un éjecteur (9) qui est agencé dans le réservoir principal (6) accueillant ce boîtier de filtration (10),
- une grille (40) par compartiment (20, 30) pour filtrer un carburant traversant ce compartiment (20, 30), chaque grille (40) coopérant avec un système de mobilité en translation (60) pour être extraite dudit compartiment (20, 30) au travers d'une fente (23, 33) présente dans un fond (14) du compartiment (20, 30),
- un système d'obturation (50) étanche par compartiment (20, 30) ayant pour fonction d'empêcher l'échappement de carburant par ladite fente (23, 33) d'un compartiment (20, 30) en cas d'absence de grille (40).

10. Circuit de carburant selon la revendication 9,
**caractérisé en ce que** ledit boîtier de filtration (10) comporte un unique compartiment principal (20) relié à au moins une pompe de transfert (8), chaque pompe de transfert (8) étant reliée à au moins un éjecteur (9).

11. Circuit de carburant selon l'une quelconque des revendications 9 à 10,
**caractérisé en ce qu'**au moins un boîtier de filtration (10) comporte un compartiment secondaire (30) coopérant avec un unique éjecteur (9) pour chaque réservoir secondaire (7) qui est relié au réservoir principal (6) accueillant ce boîtier de filtration (10).

12. Circuit de carburant selon l'une quelconque des revendications 9 à 11,
**caractérisé en ce que** ledit circuit de carburant (5) comporte deux réservoirs principaux (6) et deux réservoirs secondaires (7), chaque réservoir principal (6) étant relié aux deux réservoirs secondaires (7) par un boîtier de filtration (10) agencé dans ce réservoir principal (6).

13. Circuit de carburant selon l'une quelconque des revendications 9 à 12,
**caractérisé en ce qu'**au moins une pompe de transfert (8) agencée dans un réservoir principal (6) comporte une tuyauterie (90) pour acheminer un carburant vers un moteur (2).

14. Aéronef (1),
**caractérisé en ce que** cet aéronef (1) comporte un circuit de carburant (5) selon l'une quelconque des revendications 9 à 13.

## Patentansprüche

1. Filtergehäuse (10) zum Filtern von Kraftstoff vor mindestens einem Ejektor (9) und mindestens einer Kraftstoff-Förderpumpe (8), **dadurch gekennzeichnet, dass** das Filtergehäuse (10) aufweist:
- mindestens eine "Hauptkammer (20)" genannte Kammer, die mit einem "Haupteinlass (21)" genannten Einlass versehen ist, der die Funktion hat, mit einem Haupttank (6) in Fluidverbindung zu stehen, und die mit einem als "Hauptauslass (22)" bezeichneten Auslass pro zu versorgender Förderpumpe (8) versehen ist,
- mindestens eine "sekundäre Kammer (30)" genannte Kammer, wobei jede sekundäre Kammer (30) einen "sekundärer Einlass (31)" genannten Einlass aufweist, der die Funktion hat, in Fluidverbindung mit einem von dem Haupttank (6) verschiedenen, sekundären Tank zu stehen, und einen "sekundärer Auslass (32)" genannten Auslass, der die Funktion hat, mit einem Ejektor (9) in Fluidverbindung zu stehen,
- ein Gitter (40) pro Kammer zum Filtern eines Kraftstoffs, der diese Kammer durchfließt, wobei jedes Gitter (40) mit einem translatorisch beweglichen System zusammenwirkt, um durch einen Schlitz (23, 33) in einem Boden (14) der Kammer (20, 30) aus dieser Kammer herausgezogen zu werden,
- ein dichtes Verschlusssystem (50) pro Kammer (20, 30), welches die Funktion hat, das Austreten von Kraftstoff durch den Schlitz (23, 33) einer Kammer (20, 30) im Falle der Abwesenheit des Gitters (40) zu verhindern.

2. Filtergehäuse nach Anspruch 1,
**dadurch gekennzeichnet, dass** mindestens ein translationsbewegliches System (60) einen Träger (61) aufweist, der mit einem Gitter (40) fest verbunden ist, und ein Befestigungssystem (32) zum lösbaren und dichten Befestigen des Trägers (61).

3. Filtergehäuse nach einem der Ansprüche 1 bis 2,
**dadurch gekennzeichnet, dass** mindestens ein translationsbewegliches System (60) mindestens eine Führungsschiene (65) in einer Kammer (20, 30) aufweist.

4. Filtergehäuse nach einem der Ansprüche 1 bis 3,
**dadurch gekennzeichnet, dass** das Verschlusssystem (50) einer Kammer (20, 30) ein elastisches System (51) und mindestens einen Schieber (52) aufweist, wobei jeder Schieber (52) durch Formschluss mit einem Gitter (40) zusammenwirkt, wobei das Gitter (40) den Schieber (52) in eine "offene Stellung (POS1)" genannte Stellung schiebt, wenn dieses Gitter (40) in der Kammer (20, 30) angeordnet ist, und wobei das elastische System (51) in Abwesenheit des Gitters (40) dazu dient, den Schieber (52) in eine "geschlossene Stellung (POS2)" genannte Position zu verbringen.

5. Filtergehäuse nach Anspruch 4,
**dadurch gekennzeichnet, dass** mindestens ein Schieber (52) durch Formschluss mit einem Schlitz (23, 33) in einem Boden (14) einer Kammer (20, 30) zusammenwirkt, um diesen in der geschlossenen Stellung (POS2) zu verschließen.

6. Filtergehäuse nach einem der Ansprüche 4 bis 5,
**dadurch gekennzeichnet, dass** mindestens ein Schieber (52) durch Formschluss mit jedem Einlass (21, 31) und mit jedem Auslass (22, 32) einer Kammer zusammeriwirkt, um diese in der geschlossenen Stellung (POS2) zu verschließen.

7. Filtergehäuse nach einem der Ansprüche 4 bis 6,
**dadurch gekennzeichnet, dass** mindestens ein Schieber (52) eine Dichtung (53) aufweist, die gegen eine Umfangswanne (11) des Fittergehäuses (10) in der geschlossenen Stellung (POS2) gepresst ist.

8. Filtergehäuse nach einem der Ansprüche 1 bis 7,
**dadurch gekennzeichnet, dass** das Filtergehäuse (10) zwei sekundäre Kammern (30) und eine Hauptkammer (20) aufweist.

9. Kraftstoffversorgungssystem (5) für mindestens einen Motor (2), wobei das Kraftstoffversorgungssystem (5) mit mindestens einem Haupttank (6) versehen ist, der in Fluidverbindung mit einem Motor (2) steht, und mit mindestens einem sekundären Tank (7), der in Fluidverbindung mit dem Haupttank (6) steht, wobei das Kraftstoffversorgungssystem (5) mindestens eine Förderpumpe (8) aufweist, die in dem Haupttank (6) angeordnet ist, und mindestens einen Ejektor (9), der an die Förderpumpe (8) angeschlossen ist, **dadurch gekennzeichnet, dass** das Kraftstoffversorgungssystem (5) ein Filtergehäuse (10) aufweist, das in jedem Haupttank (6) angeordnet ist, wobei jedes Filtergehäuse (10) ein Filtergehäuse nach einem beliebigen der Ansprüche 1 bis 8 ist, wobei jedes Filtergehäuse (10) aufweist:
- mindestens eine Hauptkammer (20) mit einem Haupteinlass (21), der in Fluidverbindung mit dem Haupttank (6) steht, der das Filtergehäuse (10) aufnimmt, wobei die Hauptkammer (20) mit einem Hauptauslass (22) versehen ist, der mit mindestens einer Förderpumpe (8) verbunden ist, die in dem Haupttank (6) angeordnet ist, der dieses Filtergehäuse (10) aufnimmt,
- mindestens eine sekundäre Kammer (30), wobei jede sekundäre Kammer (30) einen sekundären Einlass (31) aufweist, der mit einem sekundären Tank (7) verbunden ist, der verschieden von dem Haupttank (6) ist, und einen sekundären Auslass (32), der an einen Ejektor (9) angeschlossen ist, der in dem Haupttank (6) angeordnet ist, der dieses Filtergehäuse (10) aufnimmt,
- ein Gitter (40) pro Kammer (20, 30) zum Filtern eines Kraftstoffs, der diese Kammer (20, 30) durchfließt, wobei jedes Gitter (40) mit einem translationsbeweglichen System (60) zusammenwirkt, um aus dieser Kammer (20, 30) durch einen Schlitz (23, 33) in einem Boden (14) der Kammer (20, 30) herausgezogen zu werden,
- ein dichtes Verschlusssystem (50) pro Kammer (20, 30), das die Funktion hat, das Austreten von Kraftstoff durch den Schlitz (23, 33) einer Kammer (20, 30) im Fall der Abwesenheit des Gitters (40) zu verhindern.

10. Kraftstoffversorgungssystem nach Anspruch 9,
**dadurch gekennzeichnet, dass** das Filtergehäuse (10) eine einzige Hauptkammer (20) aufweist, die mit mindestens einer Förderpumpe (8) verbunden ist, wobei jede Förderpumpe (8) mit mindestens einem Ejektor (9) verbunden ist.

11. Kraftstoffversorgungssystem nach einem der Ansprüche 9 bis 10,
**dadurch gekennzeichnet, dass** mindestens ein Filtergehäuse (10) eine sekundäre Kammer (30) aufweist, die mit einem einzigen Ejektor (9) für jeden sekundären Tank (7) zusammenwirkt, der mit dem Haupttank (6) verbunden ist, der das Filtergehäuse (10) aufnimmt.

12. Kraftstoffversorgungssystem nach einem der Ansprüche 9 bis 11,
**dadurch gekennzeichnet, dass** das Kraftstoffversorgungssystem (5) zwei Haupttanks (6) und zwei sekundäre Tanks (7) aufweist, wobei jeder Haupttank (6) mit zwei sekundären Tanks (7) durch ein Filtergehäuse (10) verbunden ist, das in diesem Haupttank (6) angeordnet ist.

13. Kraftstoffversorgungssystem nach einem der Ansprüche 9 bis 12,
**dadurch gekennzeichnet, dass** mindestens eine Förderpumpe (8), die in dem Haupttank (6) angeordnet ist, ein Rohrsystem (90) aufweist, um einen Kraftstoff zum Motor (2) zu leiten.

14. Luftfahrzeug (1),
**dadurch gekennzeichnet, dass** dieses Luftfahrzeug (1) ein Kraftstoffversorgungssystem (5) nach einem der Ansprüche 9 bis 13 aufweist.

## Claims

1. A filter box (10) for filtering fuel upstream from at least one ejector (9) and from at least one fuel transfer pump (8),
**characterised in that** said filter box (10) comprises:
- at least one compartment, referred to as "main compartment (20)", provided with an inlet referred to as "main inlet (21)" having the function of being in fluid communication with a main tank (6) and with one outlet referred to as "main outlet (22)" per transfer pump (8) to be fed,
- at least one compartment referred to as "secondary compartment (30)", each secondary compartment (30) comprising an inlet referred to as "secondary inlet (31)" having the function of being in fluid communication with a secondary tank (7) distinct from the main tank (6) and an outlet referred to as "secondary outlet (32)" having the function of being in fluid communication with an ejector (9),
- one grating (40) per compartment for filtering a fuel passing through this compartment, each grating (40) cooperating with a system for movement in translation in order to be extracted from said compartment via a slot (23, 33) present in a bottom (14) of the compartment (20, 30),
- one hermetic blocking system (50) per compartment (20, 30), having the function of preventing fuel from escaping via said slot (23, 33) from a compartment (20, 30) in the event of said grating (40) being absent.

2. A filter box according to Claim 1,
**characterised in that** at least one system for movement in translation (60) comprises a support (61) which is integral with a grating (40) and a fastening system (62) for fastening said support (61) in a reversible and hermetic manner.

3. A filter box according to any one of Claims 1 to 2,
**characterised in that** at least one system for movement in translation (60) comprises at least one guide rail (65) present in a compartment (20, 30).

4. A filter box according to any one of Claims 1 to 3,
**characterised in that** said blocking system (50) for blocking a compartment (20, 30) comprises an elastic system (51) and at least one slide (52), each slide (52) cooperating by shape interference with a grating (40), said grating (40) pushing the slide (52) into a position referred to as "open position (POS1)" when this grating (40) is arranged in said compartment (20, 30), and said elastic system (51) tending to position said slide (52) in a position referred to as "closed position (POS2)" in the absence of a grating (40).

5. A filter box according to Claim 4,
**characterised in that** at least one slide (52) cooperates by shape interference with a slot (23, 33) of a bottom (14) of a compartment (20, 30) in order to block it in said closed position (POS2).

6. A filter box according to any one of Claims 4 to 5,
**characterised in that** at least one slide (52) cooperates by shape interference with each inlet (21, 31) and each outlet (22, 32) of a compartment in order to block them in said closed position (POS2).

7. A filter box according to any one of Claims 4 to 6,
**characterised in that** at least one slide (52) comprises a sealing gasket (53) which is pressed against a peripheral casing (11) of the filter box (10) in said closed position (POS2).

8. A filter box according to any one of Claims 1 to 7,
**characterised in that** said filter box (10) comprises two secondary compartments (30) and one main compartment (20).

9. A fuel circuit (5) for supplying at least one engine (2) with fuel, said fuel circuit (5) being provided with at least one main tank (6) which is in fluid communication with an engine (2), and with at least one secondary tank (7) which is in fluid communication with said main tank (6), said fuel circuit (5) comprising at least one transfer pump (8) arranged in said main tank (6) and at least one ejector (9) connected to said transfer pump (8),
**characterised in that** the fuel circuit (5) comprises one filter box (10) arranged in each main tank (6), each filter box (10) being in accordance with any one of Claims 1 to 8, each filter box (10) comprising
- at least one main compartment (20) provided with a main inlet (21) which is in fluid communication with the main tank (6) which receives this filter box (10), the main compartment (20) being provided with a main outlet (22) connected to at least one transfer pump (8) arranged in the main tank (6) which receives this filter box (10),
- at least one secondary compartment (30), each secondary compartment (30) having a secondary inlet (31) connected to a secondary tank (7) distinct from the main tank (6) and a secondary outlet (32) connected to an ejector (9) which is arranged in the main tank (6) which receives this filter box (10),
- one grating (40) per compartment (20, 30) for filtering a fuel passing through this compartment (20, 30), each grating (40) cooperating with a system for movement in translation (60) in order to be extracted from said compartment (20, 30) via a slot (23, 33) present in a bottom (14) of the compartment (20, 30),
- one hermetic blocking system (50) per compartment (20, 30), having the function of preventing fuel from escaping via said slot (23, 33) from a compartment (20, 30) in the event of a grating (40) being absent.

10. A fuel circuit according to Claim 9,
**characterised in that** said filter box (10) comprises a single main compartment (20) connected to at least one transfer pump (8), each transfer pump (8) being connected to at least one ejector (9).

11. A fuel circuit according to any one of Claims 9 to 10,
**characterised in that** at least one filter box (10) comprises a secondary compartment (30) which cooperates with a single ejector (9) for each secondary tank (7) which is connected to the main tank (6) which receives this filter box (10).

12. A fuel circuit according to any one of Claims 9 to 11,
**characterised in that** said fuel circuit (5) comprises two main tanks (6) and two secondary tanks (7), each main tank (6) being connected to the two secondary tanks (7) by a filter box (10) arranged in this main tank (6).

13. A fuel circuit according to any one of Claims 9 to 12,
**characterised in that** at least one transfer pump (8) arranged in a main tank (6) comprises piping (90) for conveying a fuel to an engine (2).

14. An aircraft (1),
**characterised in that** this aircraft (1) comprises a fuel circuit (5) according to any one of Claims 9 to 13.
